# EUROPEAN PATENT APPLICATION

(11) **EP 2 781 868 A2**
(43) Date of publication of application: **24.09.2014**
(21) Application number: 14155876.7
(22) Date of filing: 20.02.2014
(51) Int. Cl.: F28C 1/16

(54) **Plume-reducing cooling tower**

(30) Priority: 18.03.2013 KR 20130028511; 21.06.2013 KR 20130071329; 24.10.2013 KR 20130126880
(71) Applicant: GnBS Engineering Co., Ltd, Gyeonggi-do 456-833 (KR)
(72) Inventor: Park, Sang Soon, 463-440 Gyeonggi-do (KR); Jeong, Jongmun, 456-823 Gyeonggi-do (KR)
(74) Representative: Prugneau, Philippe

(57) **Abstract**

The present invention discloses a plume-reducing cooling tower (100) including a housing (110) having a space formed therein, the housing (110) including a lower air inlet (111) formed at a lower portion thereof for allowing external to enter the space thereof and an upper air outlet (114) formed at an upper portion thereof for exhausting exhausted gas; a filler-unit (120) provided at a place above the lower air inlet (111) in the housing (110) for allowing external air to pass therethrough and flow upward; a treated-water spraying unit (130) provided above the filler-unit (120) in the housing (110) for spraying treated-water on the filler-unit (120); a discharging unit (160) provided above the treated-water spraying unit (130) in the housing (110) for electrifying mist, which is contained in water vapor formed by a contact between treated-water and the external air, through a corona discharge and collecting mist; and an exhausting unit (170) provided at the upper air outlet (114) for exhausting exhausted air passed through the discharging unit (160).

## Description

### CROSS-REFERENCE(S) TO RELATED APPLICATIONS

This application claims priority to Korean Patent Application Nos. 10-2013-0028511, filed on March 18, 2013; 10-2013-0071329, filed on June 21, 2013; 10-2013-0126880, filed on October 24, 2013, which are incorporated herein by reference in its entirety.

### BACKGROUND OF THE INVENTION

### Field of the invention

The present relates to a plume-reducing cooling tower which can reduce plume generated when treated-water in a power plant, a steel mill, a paper-manufacturing company, a general manufacturing plant, heating & cooling facilities of a factory building or a general office building, a semiconductor manufacturing equipment, a display device manufacturing equipment and the like is cooled.

### Description of the related art

In general, a cooling tower is an apparatus installed outside a building in which an equipment such as a semiconductor manufacturing equipment utilizing cooling water is installed, and treating high-temperature treated-water which was utilized as cooling water in the equipment. This cooling tower is installed and operated on a rooftop of an office building in which heating and cooling facilities are operated.

In the cooling tower, low-temperature external air entered thereinto through an opened area of a lower portion of a side wall and flowing upward is in contact with high-temperature treated water sprayed from an upper portion and flowing downward so that relatively high-temperature treated-water is cooled. If the cooling tower is operated in a state where the temperature of external air is low, that is, during the winter, plume is generated in the cooling tower due to a descent of dew point of exhausted air and a condensation of water vapor. To be more concrete, as external air entering a lower portion of the cooling tower is in contact with high temperature treated-water, air is exhausted to an outside of the cooling tower in a saturation state in which air contains excess moisture and the temperature of air is increased. As supersaturated air which is being exhausted to an outside of the cooling tower is in contact with external air having a relatively low temperature, a dew point of exhausted air is lowered and a condensation of water vapor is occurred so that plume is generated.

Since plume is generated by a condensation of treated-water having water as the main component, this plume is harmless to person. However, plume was visually mistaken as a mixture containing harmful materials or pollutants so that civil complaints are filed.

### SUMMARY OF THE INVENTION

The present invention provides a plume-reducing cooling tower capable of reducing a generation of plume during a process for cooling treated-water.

A plume-reducing cooling tower according to the present invention includes a housing having a space formed therein, the housing including a lower air inlet formed at a lower portion thereof for allowing external to enter the space thereof and an upper air outlet formed at an upper portion thereof for exhausting exhausted gas; a filler-unit provided at a place above the lower air inlet in the housing for allowing external air to pass therethrough and flow upward ; a treated-water spraying unit provided above the filler-unit in the housing for spraying treated-water on the filler-unit; a discharging unit provided above the treated-water spraying unit in the housing for electrifying mist, which is contained in water vapor formed by a contact between treated-water and the external air, through a corona discharge and collecting mist; and an exhausting unit provided at the upper air outlet for exhausting exhausted air passed through the discharging unit.

In addition, the housing may include a water-collecting reservoir having a sealed at lower end for collecting treated-water sprayed from the treated-water spraying unit; a treated-water inlet formed at a lower portion of the housing, the treated-water inlet being formed below a surface of the treated-water collected in the water-collecting reservoir and a treated-water pipe connected to the treated-water inlet via one portion thereof and connected to the treated-water spraying unit through the other portion thereof for supplying treated-water.

In addition, the plume-reducing cooling tower may further include a cooling water spraying unit disposed above the treated-water spraying unit for spraying cooling water having a temperature relatively lower than that of treated-water sprayed from the treated-water spraying unit to an upper end of the treated-water spraying unit.

In addition, the housing may include a cooling water pipe inlet provided above the treated-water spraying unit; and the cooling water spraying unit a hollow cooling water spraying pipe placed above the treated-water spraying unit for spraying cooling water through a spraying hole formed on a lower portion thereof and a cooling water pipe extended from an outside of the housing to an inside of the housing through the cooling water pipe inlet and connected to the cooling water spraying pipe for supplying cooling water to the cooling water spraying pipe.

In addition, the housing may include a treated-water pipe inlet formed on a lower portion thereof; and the cooling water spraying unit further includes a treated-water pipe extended from an outside of the housing to an inside of the housing through the treated-water pipe inlet; a circulation pump connected to the treated-water pipe via an inlet thereof and connected to the cooling water pipe via an outlet thereof for receiving treated-water collected in a low portion of the housing through the treated-water pipe and supplying treated-water to the cooling water pipe; and a cooling unit surrounding the treated-water pipe or the cooling water pipe for cooling treated-water through process cooling water supplied from an outside.

In addition, the plume-reducing cooling tower may further include a heat-exchanging unit disposed above the treated-water spraying unit to cool water vapor flowing upward to the treated-water spraying unit. Also, the heat-exchanging unit may include a hollow cooling pipe in which cooling water flows; a cooling water supplying pipe connected to one side of the cooling pipe for supplying cooling water to the cooling pipe; and a cooling water exhausting pipe connected to the other side of the cooling pipe for exhausting cooling water flowing from the cooling pipe.

In addition, the cooling pipe may include a plurality of transverse cooling pipes extended from one side to the other side and spaced from each other and two longitudinal cooling pipes extended in the direction which is perpendicular to the transverse cooling pipes, the longitudinal cooling pipes being connected to both ends of each transverse cooling pipe, respectively, and wherein the cooling water supplying pipe and the cooling water exhausting pipe are connected to the longitudinal cooling pipes, respectively.

In addition, the housing may further include a cooling water supplying pipe through port through which the cooling water supplying pipe passes; and a cooling water exhausting pipe through port through which the cooling water exhausting pipe passes.

In addition, the discharging unit may include a plurality of discharge electrodes extended in the vertical direction and spaced from each other in the horizontal direction between the water-collecting plates; and a plurality of discharge electrodes extended in the horizontal direction between the discharge electrodes and spaced from each other in the vertical direction, each discharge electrode comprising a supporting rod extended in the horizontal direction and a discharge plate having a coupling hole formed at a central portion thereof and a protrusion formed on an outer surface thereof to allow the discharge plate to be coupled to the supporting rod through the coupling hole, wherein a corona discharge is performed between the discharge plate of the discharge electrode and the water-collecting plate.

In addition, the discharging unit may include a plurality of water-collecting plates formed such a plurality of water-collecting passages are arranged in a plane; and a discharge electrode inserted in the water-collecting passage for allowing a corona discharge to be caused between the discharge electrode and the water-collecting plate. Also, the plurality of water-collecting plates may be formed in the shape of a plate, placed in the housing in the vertical direction and spaced from each other in the horizontal direction, wherein the plurality of discharge electrodes may be extended in the vertical direction and spaced from each other in the horizontal direction between the water-collecting plates, wherein each of the discharge electrode may include a supporting rod extended in the vertical direction and a discharge plate having a coupling hole formed at a central portion thereof and a protrusion formed on an outer surface thereof to allow the discharge plate to be coupled to the supporting rod through the coupling hole, and wherein a corona discharge is performed between the discharge plate of the discharge electrode and the water-collecting plate.

In addition, the water-collecting plates may be disposed such that hollow water collecting passages having opened upper and lower ends are arranged in the lattices, wherein each of the discharge electrode comprises a supporting rod extended in the vertical direction and placed in the water-collecting passage of the water-collecting plate and a discharge plate having a coupling hole formed at a central portion thereof and a protrusion formed on an outer surface thereof to allow the discharge plate to be coupled to the supporting rod through the coupling hole, and wherein a corona discharge is performed between the discharge plate of the discharge electrode and the water-collecting plate. Also, each water-collecting passage may have opened upper and lower ends and may have a hollow triangular column shape, a hollow rectangular column shape, hollow a cylinder shape or a hollow hexagonal column, and the water-collecting passages are arranged in the lattices.

In addition, the discharging unit may further include a supporting frame placed above the water-collecting plate and supporting the discharge electrode to allow the discharge electrode to be spaced from the water-collecting plate; and an insulator module supporting the supporting frame at an inside of the water-collecting plate for electrically isolating the water-collecting plate from the discharge electrode. Also, the supporting frame may be equipped with a plurality of transverse frames coupled to an upper end of the supporting rod and a longitudinal frame coupled to both sides of the transverse frame, and wherein the insulator module include a securing rod coupled to the transverse frame, an insulator coupled to the securing rod and a securing plate coupled to a lower portion of the insulator and secured to an inner surface of the water-collecting passage of the water-collecting plate at certain height. Also, the supporting frame may be equipped with a plurality of transverse frames coupled to an upper end of the supporting rod and a longitudinal frame coupled to both sides of the transverse frame, and wherein the insulator module may include a securing rod coupled to the transverse frame, an insulator coupled to the securing rod and a securing plate coupled to a lower portion of the insulator and placed on an upper surface of the water-collecting passage of the water-collecting plate. Also, the insulator module may further include an upper block coupled to a lower portion of the fixing rod and to an upper portion of the insulator and a lower block coupled to a lower portion of the insulator and to an upper portion of the fixing plate.

In addition, the housing may further include an upper air inlet formed between the treated-water spraying unit and the discharging unit to allow external air to be introduced.

In addition, the housing may further include a third air inlet formed between the discharging unit and the exhausting unit to allow external air to be introduced.

In addition, the water-collecting plate may have a vertical height of 200 to 1,000 mm, the discharge plates are spaced from each other at a vertical distance of 5 to 100 mm in the vertical direction, and the water-collecting plate and the protrusion of the discharge plate are spaced from each other at a horizontal distance of 50 to 200 mm in the horizontal direction.

In addition, the discharging unit may include the plurality of water-collecting plates formed in the shape of a plate, placed in the housing in the vertical direction and spaced from each other in the horizontal direction; and the plurality of discharge electrodes formed in the shape of a plate corresponding to the water-collecting plate and placed between the water-collecting plates in the vertical direction, and wherein a corona discharge is performed between the discharge electrode and the water-collecting plate.

### BRIEF DESCRIPTION OF THE DRAWING

FIG. 1 is a vertical sectional view of a plume-reducing cooling tower according to one embodiment of the present invention;
FIG. 2 is a cross-sectional view taken along the line A-A of FIG. 1;
FIG. 3 is a detail vertical sectional view of a discharging unit shown in FIG. 1;
FIG. 4 is a cross-sectional view taken along the line B-B of FIG. 3;
FIG. 5 is a vertical sectional view corresponding to Fig. 1 and illustrating a plume-reducing cooling tower according to another embodiment of the present invention;
FIG. 6 is a cross-sectional view taken along the line C-C of FIG. 5;
FIG. 7 is a sectional view corresponding to FIG. 4 and illustrating a discharging unit provided in a plume-reducing cooling tower according to still another embodiment of the present invention;
FIG. 8 is a sectional view corresponding to FIG. 4 and illustrating a discharging unit provided in a plume-reducing cooling tower according to still another embodiment of the present invention;
FIG. 9 is a bottom view of a discharging unit provided in a plume-reducing cooling tower according to still another embodiment of the present invention;
FIG. 10 is a bottom view of a discharging unit provided in a plume-reducing cooling tower according to still another embodiment of the present invention;
FIG. 11 is a partial vertical sectional view of a plume-reducing cooling tower according to still another embodiment of the present invention;
FIG. 12 is a cross-sectional view taken along the line D-D of FIG. 11;
FIG. 13 is a cross-sectional view taken along the line E-E of FIG. 11;
FIG. 14 is a horizontal sectional view corresponding to FIG. 13 and illustrating a discharging unit provided in a plume-reducing cooling tower according to still another embodiment of the present invention;
FIG. 15 is a horizontal sectional view corresponding to FIG. 13 and illustrating a discharging unit provided in a plume-reducing cooling tower according to still another embodiment of the present invention;
FIG. 16 is a horizontal sectional view corresponding to FIG. 13 and illustrating a discharging unit provided in a plume-reducing cooling tower according to still another embodiment of the present invention; and
FIG. 17 is a vertical sectional view corresponding to FIG. 11 and illustrating a discharging unit provided in a plume-reducing cooling tower according to still another embodiment of the present invention.
FIG. 18 is a horizontal sectional view of a discharging unit provided in a plume-reducing cooling tower according to still another embodiment of the present invention.

### DETAILED DESCRIPTION OF THE PREFERRED EMBODIMENTS

Hereinafter, a plume-reducing cooling tower according to the preferred embodiments of the present invention will be described in more detail with reference to the accompanying drawings.

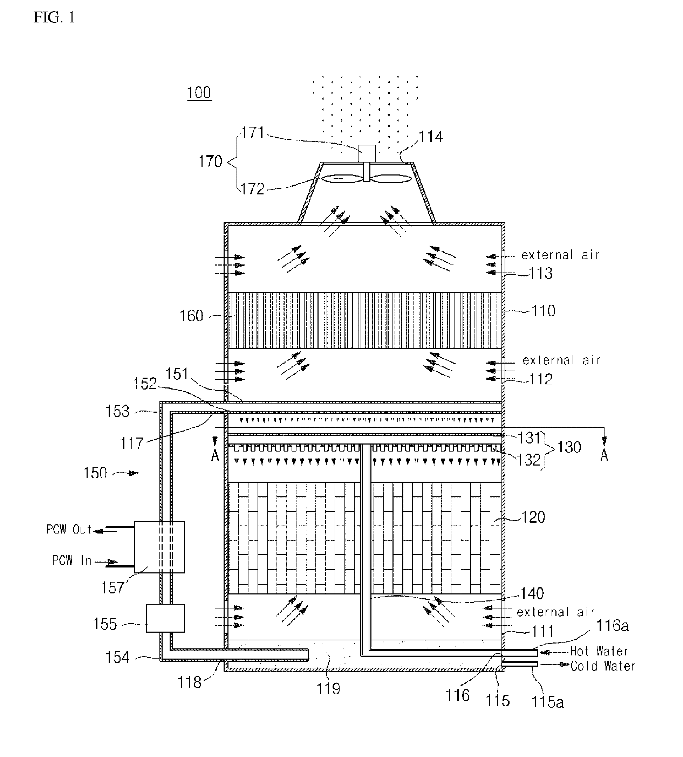

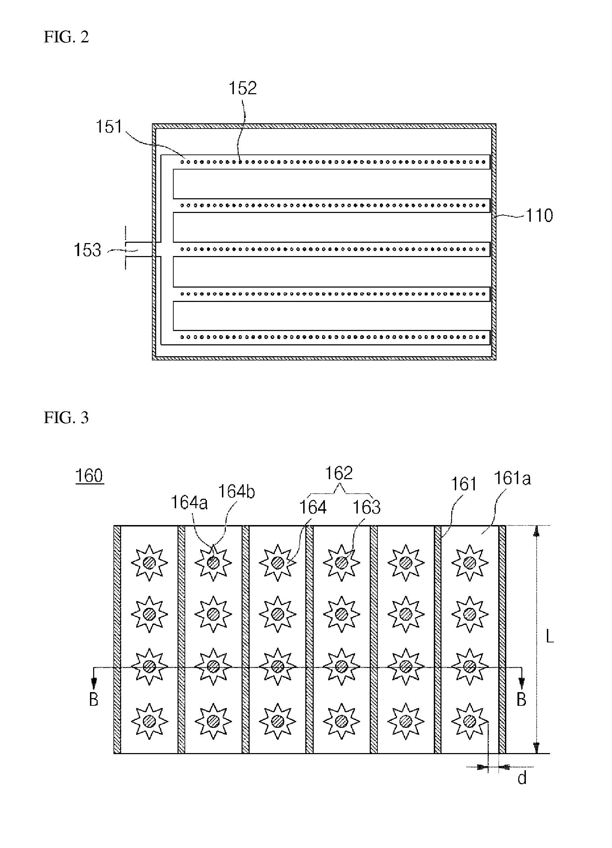

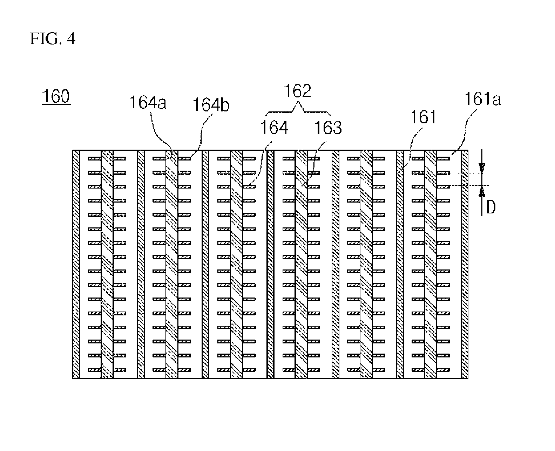

FIG. 1 is a vertical sectional view of a plume-reducing cooling tower according to one embodiment of the present invention, FIG. 2 is a cross-sectional view taken along the line A-A of FIG. 1, FIG. 3 is a detail vertical sectional view of a discharging unit shown in FIG. 1, and FIG. 4 is a cross-sectional view taken along the line B-B of FIG. 3.

Referring to FIG. 1 to FIG. 4, the plume-reducing cooling tower 100 according to one embodiment of the present invention includes a housing 110, a filler-unit 120, a treated-water spraying unit 130, a discharging unit 160 and an exhausting unit 170. In addition, the plume-reducing cooling tower 100 may further include a treated-water supplying pipe 140 and a cooling water spraying unit 150.

In the plume-reducing cooling tower 100, treated-water having a relative high temperature and supplied from the treated-water spraying unit 130 is in contact with external air flowing thereinto and saturated water vapor generated in the above process passes through the discharging unit 160. At this time, the discharging unit 160 electrifies and collects mist contained in saturated water vapor to reduce the humidity of saturated water vapor exhausted an outside. Here, the mist means fine water particles contained in exhausted air. Therefore, since amount of mist in air exhausted from the exhausting unit 170 of the plume-reducing cooling tower 100 to an outside is relatively reduced, plume is not generated when air exhausted from the plume-reducing cooling tower is in contact with external air.

Furthermore, the plume-reducing cooling tower 100 allows external air to be introduced between the cooling water spraying unit 150 and the discharging unit 160 to lower a temperature of saturated water vapor and to increase a size of the mist. In winter, external air having a relatively extremely low temperature and humidity enters between the cooling water spraying unit 150 and the discharging unit 160 to lower a temperature of saturated water vapor so that it is possible to effectively increase a size of mist in the plume-reducing cooling tower 100. Therefore, since the discharging unit 160 electrifies and collects mist having a particle size which is increased by cooling water, mist can be more effectively removed.

Small-sized mist contained in saturated water vapor cannot be collected in the discharging unit 160, but can be exhausted to an outside. And, such mist is in contact with relative low-temperature external and condensed so that a size of mist is increased and there is concern that mist is regenerated into plume. In winter, in particular, mist is condensed due to a low-temperature external air so that mist may be regenerated into plume. However, since the cooling water spraying unit 150 increases a size of mist contained in saturated water vapor and the discharging unit 150 collects effectively mist, the number of mist in saturated water vapor is reduced and even though mist is in contact with low-temperature external air, the likelihood of generation of plume is reduced.

When relatively high-temperature saturated water vapor is in contacted with relatively low-temperature air, the dew point of saturated water vapor is lowered and water vapor is condensed so that plume is generated. Thus, in order to reduce plume generated by saturated water vapor, it is necessary to increase a temperature of supersaturated water vapor or to reduce a humidity of saturated water vapor. The plume reducing cooling tower 100 of the present invention reduces a humidity of saturated water vapor to reduce of a generation of plume.

The housing 110 includes a lower air inlet 111, an upper air outlet 114, a treated-water outlet 115 and a treated-water inlet 116. The housing 110 may further include an upper air outlet 112, a cooling water pipe inlet 117, a third air inlet 113 and a treated-water pipe inlet 118. The housing 110 has a water-collecting reservoir 119 formed at a lower portion thereof for collecting treated-water therein. Meanwhile, the housing 110 may be formed by a housing of the conventional cooling tower.

The housing 110 may have a hollow cylindrical shape and a hollow polygonal cross-sectional shape such as a rectangular cross-sectional shape or a hexagonal cross-sectional shape. A lower end of the lower portion of the housing 110 is water-tightly sealed so that the lower portion of the housing 110 may be utilized as the water-collecting reservoir 119 in which treated-water sprayed from the treated-water spraying unit 130 and cooling water sprayed from the cooling water spraying unit 150 are collected.

The lower air inlet 111 is formed below the filler-unit 120, external air flows in the lower air inlet and is supplied to the filler-unit 120. The lower air inlet 111 has a dimension for allowing amount of external air required for cooling treated-water sprayed from the treated-water spraying unit 130 to be entered therein. A circular hole or a rectangular hole may be formed as the lower air inlet 111, and circular holes or rectangular holes may be successively formed on the housing 110 and disposed in the shape of a band in the circumferential direction of the housing.

The upper air inlet 112 is formed between the cooling water spraying unit 150 and the discharging unit 160 to allow external air to be entered and mixed with saturated water vapor. External air entering the upper air inlet 112 is mixed with saturated water vapor to lower a temperature and humidity of saturated water vapor. The upper air inlet 112 has a dimension for allowing sufficient amount of external air required for lowering the temperature and humidity of saturated water vapor to be entered. Meanwhile, if a generation of plume is sufficiently reduced by the discharging unit 160, the upper air inlet 112 may not be formed. A circular hole or a rectangular hole may be formed as the upper air inlet 112, and circular holes or rectangular holes may be successively formed on the housing 110 and disposed in the shape of a band in the circumferential direction of the housing.

The third air inlet 113 is formed between the discharging unit 160 and the exhausting unit 170 to allow external air to be entered and mixed with exhaust gas passed through the discharging unit 160. A circular hole or a rectangular hole may be formed as the third air inlet 113, and circular holes or rectangular holes may be successively formed on the housing 110 and disposed in the shape of a band in the circumferential direction of the housing. External air entering the third air inlet 113 is mixed with exhaust air passing through the discharging unit 160 to allow the time required for external air, which is in contact with exhaust air at an outside of the housing 110, absorbing mist to be shortened, so that a generation of plume can be reduced. In other words, since mist contained in exhaust air is absorbed into external air entering the housing 110, a degree of absorption of mist into external air at an outside of the housing 100 can be reduced to reduce a generation of plume. In addition, since small mist which has a diameter of approximately 100 nm and cannot be completely collected by the discharging unit 160 is in contact with external air in the housing 110 and absorbed into external air, a concentration of plume caused by a contact between mist and external air at an outside of the housing 110 and a height at which plume is generated is lowered.

The upper air outlet 114 is formed at an upper portion of the housing 110 and the exhausting unit 170 is provided at the upper air unit. The upper air outlet 114 allows exhaust air passing through the discharging unit 160 to be exhausted therethrough. The upper air outlet 114 is dimensioned such that air can be smoothly exhausted

The treated-water outlet 115 is formed at a lower portion of the housing 110. Preferably, the treated-water outlet is formed on a place which is below a surface of the treated-water collected in the water-collecting reservoir 119 and adjacent to a lower end of the housing 110. A treated-water exhausting pipe 115a connected to a processing facility is coupled with the treated-water outlet 115. The treated-water outlet 115 allows treated-water collected in the water-collecting reservoir 119 to be supplied to the treated-water exhausting pipe 11a.

The treated-water inlet 116 is formed at a lower portion of the housing 110. Preferably, the treated-water inlet is formed on a place which is below a surface of the treated-water collected in the water-collecting reservoir 119 and a surface of cooling water. The treated-water supplying pipe 140 provided in the housing 110 is coupled with the treated-water inlet 116, and a treated-water inflowing pipe 116a connected to the processing facility is coupled to the treated-water inlet. The treated-water inlet 116 allows treated-water utilized in the processing facility to be entered to the treated-water supplying pipe 140 via the treated-water inflowing pipe 116a. Meanwhile, if the treated-water supplying pipe 140 is not provided in the housing 110, the treated-water inlet 116 may be formed at a location at which the treated-water spraying unit 130 is installed, to allow the treated-water spraying unit 130 to be coupled to the treated-water inlet.

At an upper portion of the housing 110, the cooling water pipe inlet 117 is provided above the treated-water spraying unit 130. The cooling water pipe inlet 117 provides a passage through which a cooling water pipe 153 (described below) of the cooling water spraying unit 150 passes.

At a lower portion of the housing 110, the treated-water pipe inlet 118 is provided at a side surface or a bottom surface of the water-collecting reservoir 119 in which treated-water is collected. The treated-water pipe inlet 118 provides a passage through which a treated-water pipe 154 (described below) of the cooling water spraying unit 150 passes.

In the housing 110, the filler-unit 120 is provided at a place which is above the lower air inlet 111. The filler-unit 120 has a horizontal area corresponding to a horizontal sectional area of the housing 110, and an internal space of the filler-unit is filled with filler (not shown). Filler which has been utilized in the conventional cooling tower may be employed as the filler constituting the filler-unit 120. The filler-unit 120 is formed such that external air entering to the lower air inlet 111 passes through the filler-unit and then flows to an upper portion of the housing. The filler-unit 120 allows treated-water sprayed from the treated-water spraying unit 130 to be in contact with external air and to be then cooled. In other words, external air flowing upward below the filler unit 120 passes upward through the filler-unit 120 and treated-water sprayed above the filler unit passes downward through the filler-unit.

The treated-water spraying unit 130 includes a treated-water spraying pipe 131 and spraying nozzles 132. The treated-water spraying unit 130 is employed in the processing facility to spray treated-water having a relatively high temperature, to an upper portion of the filler-unit 120. The spraying nozzle employed in a conventional cooling tower may be utilized for forming the treated-water spraying unit 130. In the housing 110, the treated-water spraying unit 130 is placed above the filler-unit 120 to spray treated-water to an upper portion of the filler-unit 120.

The treated-water spraying pipe 131 is formed of a hollow pipe extended horizontally in the shape of a lattice or in the radial direction above the filler-unit 120. One end of the treated-water spraying pipe 131 is connected to the treated-water inflowing pipe 116a via the treated-water inlet 116. The treated-water inflowing pipe 116a supplies treated-water to the treated-water spraying pipe 131.

The spraying nozzles 132 are coupled to a lower portion of the treated-water spraying pipe 131 at regular intervals. The spraying nozzles 132 spray treated-water, which is supplied from the treated-water spraying pipe 131, to an upper portion of the filler unit 120.

In the housing 110, one end of the treated-water supplying pipe 140 is connected to the treated-water inlet 116 and the other end is connected to the treated-water spraying pipe 131 of the treated-water spraying unit 130. At the lower portion of the housing 110, in addition, the treated-water supplying pipe 140 is extended inward from an outer side and then extended upward. In this state, this treated-water supplying pipe 140 passes through the filler-unit 120 and is connected to the treated-water spraying pipe 131. In the state where the treated-water supplying pipe is submerged into treated-water collected in the water-collecting reservoir 119, at this time, the treated-water supplying pipe 140 may be extended from an outer side to an inner side of the housing 110. Thus, relatively high-temperature treated-water flowing in the treated-water supplying pipe 140 is heat-exchanged with relatively low-temperature treated-water in the water-collecting reservoir 119 so that a temperature of treated-water flowing in the treated-water supplying pipe is lowered. Also, while passing through the filler-unit 120, a temperature of treated-water in the treated-water supplying pipe 140 is lowered. As a result, the treated-water supplying pipe 140 supplies treated-water supplying pipe with the temperature which was lowered to the treated-water spraying pipe 131 so that a temperature of generated water vapor is lowered. Ultimately, a generation of plume can be reduced.

Meanwhile, the treated-water supplying pipe 140 may be omitted if the treated-water inflowing pipe 116a is directly connected to the treated-water spraying unit 130. In other words, in the case where the treated-water inlet 116 is provided at an upper portion of the housing 110 and the treated-water inflowing pipe 116a is directly connected to the treated-water spraying pipe 131 of treated-water spraying unit 130, the treated-water supplying pipe 140 is omitted.

The cooling water spraying unit 150 includes a cooling water spraying pipe 151 and a cooling water pipe 153. In addition, the cooling water spraying unit 150 may include a treated-water pipe 154, a circulation pump 155 and a cooling unit 157.

The cooling water spraying unit 150 sprays cooling water, which has a temperature relatively lower than that of treated-water sprayed from the treated-water spraying unit 130, to an upper end of the treated-water spraying unit 130 to lower a temperature of saturated water vapor. Thus, as a temperature of saturated water vapor is lowered, mists contained in saturated water vapor are condensed and a particle size of mist is increased so that the discharging unit 160 can effectively collect mists. Meanwhile, cooling water sprayed from the cooling water spraying unit 150 is collected in the water-collecting reservoir 119 provided at a lower portion of the housing 110.

The cooling water spraying pipe 151 is formed of hollow pipe and placed above the treated-water spraying unit 130. The cooling water spraying pipe 151 includes at least one pipe extended from a side at which the cooling water pipe inlet 117 is formed to an opposite side. Also, the cooling water spraying pipe 151 may consist of a plurality of pipes which are spaced from each other in the extension direction and the vertical direction and are parallel to each other. In addition, the cooling water spraying pipe 151 may be formed with a lattice shape or a radial shape. One end of the cooling water spraying pipe 151 is connected to the cooling water pipe 153 passing through the cooling water pipe inlet 117. Cooling water is supplied to the cooling water spraying pipe 151 through the cooling water pipe 153.

The cooling water spraying pipe 151 further includes a spraying hole 152 formed on a lower portion thereof. Cooling water supplied to the cooling water spraying pipe 151 is sprayed downward, that is, toward the treated-water spraying unit 130 by the spraying hole 152. A plurality of spraying holes 152 are spaced from each other at certain intervals on a lower portion cooling water spraying pipe 151.

A hollow pipe is employed as the cooling water pipe 153, and this cooling water pipe is extended from an outside of the housing 110 to an inside of the housing 110 through the cooling water pipe inlet 117 so that one end of the cooling water pipe is connected to the cooling water spraying pipe 151. The cooling water pipe 153 supplies cooling water to the cooling water spraying pipe 151. The other end of the cooling water pipe 153 is connected to the circulation pump 155, and cooling water supplied from the circulation pump 155 and cooled by the cooling unit 157 is supplied to cool water pipe and is then supplied to the cooling water spraying pipe 151. In addition, the cooling water pipe 153 may receive cooling water from a separate cooling water supplying means (not shown) and supply it to the cooling water spraying pipe 151. In order to increase cooling efficiency, meanwhile, a portion of the cooling water pipe 153, which corresponds to an inside of the cooling unit 157, may be bent.

A hollow pipe is employed as the treated-water pipe 154, and one portion of this treated-water pipe is extended from an outside of the housing 110 to an inside of the housing 110 through the treated-water pipe inlet 117, the other portion of the treated-water pipe is connected to the circulation pump 155. Due to an operation of the circulation pump 155, the treated-water pipe 154 supplies treated-water (entered to one side thereof) in the water-collecting reservoir 119 to the circulation pump 155.

A conventional pump for supplying water is employed as the circulation pump 155. The treated-water pipe 154 is connected to an inlet of the circulation pump 155 and the cooling water pipe 153 is connected to an outlet of the circulation pump. Treated-water in the water-collecting reservoir 119 flows to the circulation pump 155 via the treated-water pipe 154 and the circulation pump supplies this treated-water to the cooling water pipe 153.

A conventional heat-exchanger utilizing process cooling water may be employed as the cooling unit 157. For example, the cooling unit 157 has a hollow space formed therein and is formed such that process cooling water enters in the cooling unit via one side and is exhausted via the other side. In addition, the cooling water pipe 153 passes through an inside of the cooling unit 157. Thus, the cooling unit 157 surrounds around an outer surface of the cooling water pipe 153 and utilizes process cooling water to cool treated-water supplied from the circulation pump 155 and flowing in the cooling water pipe 153 so that this treated-water becomes cooling water. In addition, the cooling unit 157 may surround an outer surface of the treated-water pipe 154. Thus, the cooling unit 157 cools treated-water supplied flowing in the treated-water pipe 154 so that this treated-water becomes cooling water.

The discharging unit 160 includes a water-collecting plate 161 and a discharge electrode 162. The discharging unit 160 is disposed between the treated-water spraying unit 130 and the exhausting unit 170 in the housing 110. The discharging unit 160 electrifies and collects mists which are contained in saturated water vapor due to a corona discharge (or a non-thermal temperature plasma discharge) generated between the water-collecting plate 161 and the discharge electrode 162. If a distance between the water-collecting plate 161 and the discharge electrode 162 is increased, a discharge voltage is also increased for the sufficient corona discharge.

According to amount of treated-water entering the cooling tower, saturated water vapor generation amount and amount of mist contained in saturated water vapor, the discharging unit 160 may have necessary height and width. In proportion to the height and entire width, a collection space and an area for collecting mist of the discharging unit 160 are increased so that the collection efficiency is increased. In view of a limitation of installation space for the cooling tower and a limitation of installation space for the discharging unit 160 in the housing 110, the discharging unit 160 may have appropriate height and width.

Although not explicitly shown, the discharging unit 160 may be provided with separate spraying means (not shown) provided at a lower portion thereof for spraying water or water vapor into a space under the discharging unit 16. The spraying means can spray water or water vapor to saturated water vapor to increase a size of mist contained in saturated water vapor. Mist is combined with water or water vapor so that a size of mist is increased and mist is fallen down before reaching the discharging unit 160. As a result, amount of mist in saturated water vapor is reduced. Accordingly, the collection efficiency of the discharging unit 160 for mist can be increased. Meanwhile, since water or water vapor is sprayed by the spraying means in a state where a temperature of water or water vapor is lower than that of treated-water, additional saturated water vapor is not generated.

A plurality of water-collecting plates 161, each of which having a width and a height, are disposed in the housing 110 in the vertical direction and spaced from each other in the horizontal direction. In other words, the water-collecting plates 161 are disposed such that hollow water-collecting passages 161a, each of which having opened upper and lower ends, are parallel to each other plates in the plane.

The water-collecting plates 161 are disposed parallel to the flow direction of water vapor. The plurality of water-collecting plates 161 are spaced from each other at regular intervals and disposed parallel to each other by separate supporting members (not shown). In addition, a space between water-collecting plates 161 is directly connected to a space above the treated-water spraying unit 130 and saturated water vapor passed though the treated-water spraying unit 130 enters the space between water-collecting plates 161. Thus, saturated water vapor passes through the treated-water spraying unit 130 and then passes through the space between water-collecting plates 161. The water-collecting plates 161 electrify mist contained in water vapor to collect mist on surfaces thereof.

The water-collecting plate 161 has a vertical height L required for collecting mists which are electrified and moved. When a flow rate of water vapor passing through the discharging unit 160 is high or a moving speed of mist is high due to a high temperature of treated-water which is being sprayed, it is possible to increase the mist collection efficiency by increasing the vertical height L of the water-collecting plate. Preferably, the above vertical height L is 200 to 1,000 mm. If the vertical height L is too large, although the mist collection efficiency is increased, a current becomes high so that the power consumption can be increased. If the vertical height L is too small, electrified mist is not collected on the water-collecting plate 161 and can flow above the discharging unit 160.

The water-collecting plate 161 is formed of electrical conductive material and is electrically connected to a negative electrode of a separate control unit (not shown) to be formed as a negative electrode. It is desirable that the water-collecting plate 161 is formed of hastelloy, stainless steel or carbon fiber reinforced plastic (CFRP) obtained by mixing fiber reinforced plastic (FRP) and carbon, which have the anti-corrosive property. Meanwhile, the water-collecting plate 161 may be connected to a ground terminal of the plume-reducing cooling tower 100.

The discharge electrode 162 includes a supporting rod 163 and a discharge plate 164. A plurality of discharge electrodes 162 are spaced from each at certain intervals in the vertical direction and each discharge electrode is extended in the horizontal direction in the space between the water-collecting plates 161. The plurality of discharge electrodes 162 are spaced from each at regular intervals and disposed parallel to each other by separate supporting members (not shown in the drawing).

The discharge electrode 162 is generally formed of electrical conductive material and is electrically connected to a positive electrode of the control unit to be formed as a positive electrode. Together with the water-collecting plate 161, thus, the discharge electrode 162 causes the corona discharge.

The supporting rod 163 is formed in the shape of a rod or a bar such as a cylindrical column, a rectangular-sectioned column or a polygonal-sectioned column. A plurality of supporting rods 163 are spaced from each other at regular intervals in the vertical direction, and each supporting rod is extended from a space between the water-collecting plates 161 in the horizontal direction. The plurality of supporting rods 163 are spaced from each at regular intervals and disposed parallel to each other by separate supporting members (not shown in the drawing). The supporting rod 163 is generally formed of electrical conductive material and is electrically connected to a positive electrode of the control unit to be formed as a positive electrode.

The discharge plate 164 is formed in the shape of a plate or a block and includes a coupling hole 164a formed at a central portion thereof and a protrusion 164b formed on an outer surface thereof. By inserting the supporting rod 163 into the coupling hole 164a, the discharge plate 164 is coupled with the supporting rod 163 in the vertical direction. A plurality of discharge plates 164 are coupled with the supporting rod 163 in the horizontal direction and are spaced from each other at regular vertical distance D. The vertical distance D between the discharge plates 164 influences a degree of concentration of the lines of electric force generated between the water-collecting plate 161 and the discharge plate 164 when the discharge is performed. Thus, when mist enters between the water-collecting plate 161 and the discharge plate 164, a degree of generation of the spark is adjusted according to the vertical distance D so that the discharging unit 160 collects effectively mist. The discharge plates 164 are spaced from each other at the vertical distance D of 5 to 10 mm. Preferably, the discharge plates 164 may be spaced from each other at vertical distance D of 20 to 20mm. If the vertical distance D is too small, due to an excessive concentration of the lines of electric force, when the same voltage is applied, a spark generation frequency is too high. In addition, if the vertical distance D is too large, an ionization ratio and a degree of generation of electron of mist are lowered so that the electrification ration of mist is lowered. As a result, the mist collection efficiency is deteriorated.

The discharging plate 164 is formed of conductive material, and may be preferably formed of hastelloy or stainless steel having an excellent anti-corrosive property.

The protrusion 164b is protruded toward an outer surface of the discharge plate 164 and may be formed with a triangular shape or a pin shape to have a sharpened end. The protrusions 164b having regular shape and spaced from each other at regular intervals are formed on an outer surface of the discharge plate 164. Thus, the corona discharge is uniformly performed between the water-collecting plate 161 and the protrusion 164b so that the discharging unit 160 can collect much more mists. An end of the protrusion 164b is spaced from the water-collecting plate 161 at a horizontal distance d. The horizontal distance d determines a discharge voltage to be applied between the water-collecting plate 161 and the discharge electrode 162. Preferably, the above horizontal distance d is 50 to 200 mm. If the horizontal distance d is too small, a low discharge voltage should be applied so that a sufficient discharge is not generated to lower the collection efficiency. In addition, if the horizontal distance is too large, a high discharge voltage should be applied so that a distance along which electrified mist is moved can be lengthened to lower the collection efficiency.

The horizontal distance d is in proportion to the applied discharge voltage. For example, the discharge voltage may be 20 to 50 kV calculated on the basis of the horizontal distance mentioned above. If the horizontal distance d is increased, the discharge voltage applied between the water-collecting plate 161 and the discharge electrode 162 is increased. Furthermore, the horizontal distance d is increased according to amount of mist contained in water vapor. If the discharge voltage is too low, the discharge efficiency is reduced. In addition, if the discharge voltage is too high, the corona discharge is not performed and a spark discharge is generated so that sparks are formed.

Due to the sharpened end portion, the protrusion 164b has a pin shape so that it is possible to reduce the discharge voltage. In other words, since the discharge is performed between the water-collecting plate 161 and the discharge plate 164 in a non-uniform electric field manner of a surface to a pin, the effective corona discharge is carried out with the low discharge voltage so that mist is effectively electrified and collected.

Meanwhile, the discharge plate 164 may be secured to the supporting rod 163 by a welding or a separate securing guide (not shown) may be coupled between the discharge plates 164 to secure the discharging plate. The securing guide is formed in the shape of a ring and inserted in and secured to the supporting rod 163 to space the discharge plates 164 from each other. In addition, the discharge plate 164 may be formed integrally the supporting rod 163. In other words, a surface of the supporting rod 163 may be protruded to form the discharge plate.

The exhausting unit 170 includes a motor 171 and a cooling fan 172. At an upper portion of the housing 110, the exhausting unit 170 is coupled with the upper air outlet 114 to exhaust air passing through the discharging unit 160 to an outside of the housing 110. A conventional exhausting unit utilized in a convention cooling tower may be employed as the exhausting unit 170.

A motor utilized in a conventional cooling tower is employed as the motor 171 and is coupled with upper air outlet 114 by a separate supporting member 171a.

The cooling fan 172 is connected to the motor 171 by means of a rotational shaft and is rotated by the motor 171. The cooling fan 172 exhausts exhausted air to an outside of the housing 110.

Hereinafter, an operation of the plume-reducing cooling tower according to one embodiment of the present invention is illustrated.

The motor 171 and the cooling fan 172 of the exhausting unit 170 coupled with the upper air outlet 114 at the upper portion of the housing 110 are operated, and external air of an outside of the housing 110 flows into the lower portion in the housing 110 through the lower air inlet 111. External air is moved upward, passes through the filler-unit 120 and is then moved upward. Meanwhile, relatively high-temperature treated-water is supplied from the treated-water inflowing pipe 116a of the processing facility connected to the treated-water inlet 116 to the treated-water supplying pipe 140, and the treated-water supplying pipe supplies this treated-water to the treated-water spraying unit 130. At this time, the treated-water supplying pipe 140 passes the water-collecting reservoir 119 and the filler-unit 120 to primarily cool treated-water. While flowing in the treated-water spraying pipe 131 and the spraying nozzles 132 of the treated-water spraying unit 130, treated-water is sprayed above the filler-unit 120. Treated-water is fallen downward and is in contact with external air flowing upward from a lower portion. Treated-water is continuously in contact with external air above the filler-unit 120, in the filler-unit and below the filler-unit. Thus, external air is in contact with treated-water and a temperature of external air is increased so that a dew point and humidity of treated-water is increased and treated-water becomes saturated water vapor. In addition, the cooling water spraying pipe 151 sprays relatively low-temperature cooling water, which is supplied from the cooling water pipe 153, to saturated water vapor to lower a temperature of saturated water vapor and condense mist contained in saturated water vapor. As a result, a size of mist is increased. As cooling water supplied from the cooling water pipe 153, at this time, treated-water entering from the water-collecting reservoir 119 through the treated-water pipe 154 by means of the circulation pump 155 may be utilized. Therefore, since the discharging unit 160 electrifies and collects mist having a particle size which is increased by cooling water, mist are more effectively collected and removed. On the other hands, while external air entered through the upper air outlet 112 is mixed with saturated water vapor, external air lowers a temperature and a relative humidity of saturated water vapor. Saturated water vapor is moved upward and enters between the water-collecting plates 161 of the discharging unit 160. At this time, the discharging unit 160 causes the corona discharge using the discharge voltage applied between the water-collecting plate 161 and the discharge electrode 162. Mists contained in saturated water vapor have polarities and are electrified by the applied discharge voltage and a size of mist is increased due attractive force between opposite polarities. As a size of mist is increased, mists are collected on the water-collecting plate 161 or the discharge electrode 162 and then flows downward so that mists are collected in the water-collecting reservoir 119 placed at a lower portion of the housing 110. In a state where the humidity is relatively lowered, saturated water vapor is moved upward to a space above the discharging unit 160 and becomes exhausted air. Exhaust air is exhausted to an outside of the housing 110 by means of the exhausting unit 170. Since, under the condition of a low humidity, the exhaust air is exhausted to an outside of the housing and is in contact with external air, a generation of plume is reduced.

Next, the plume-reducing cooling tower according to another embodiment of the present invention is illustrated.

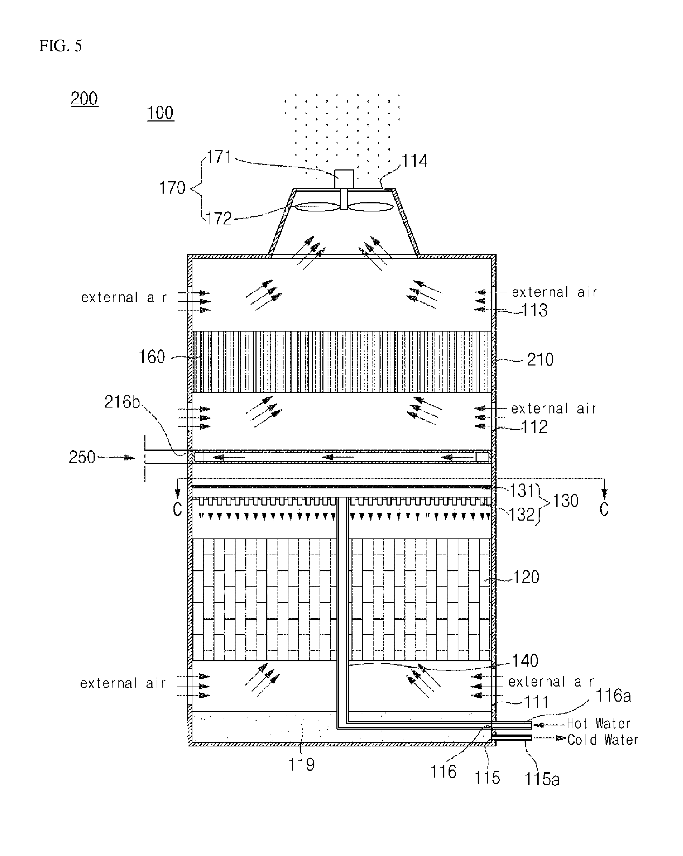

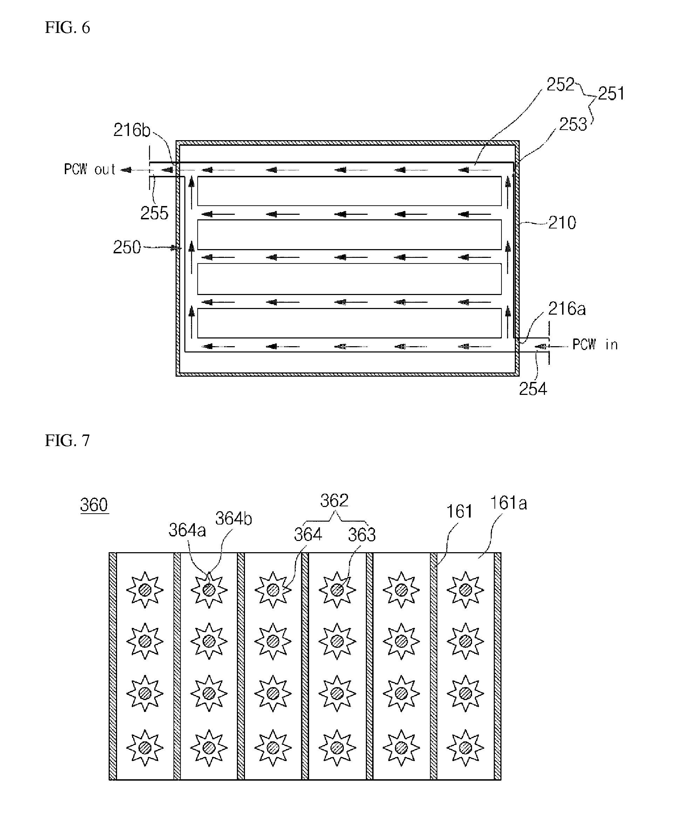

FIG. 5 is a vertical sectional view corresponding to Fig. 1 and illustrating a plume-reducing cooling tower according to another embodiment of the present invention. FIG. 6 is a cross-sectional view taken along the line C-C of FIG. 5.

Referring to FIG. 1 to FIG. 6, a plume-reducing cooling tower 200 according to another embodiment of the present invention includes a housing 210, the filler-unit 120, the treated-water spraying unit 130, a heat-exchanging unit 250, the discharging unit 160 and the exhausting unit 170. In addition, the plume-reducing cooling tower 200 may further include the treated-water supplying pipe 140.

Except that the heat-exchanging unit 250 is provided in place of the cooling water spraying unit 150 and some structure of the housing 210 differs from that of the housing 110 due to the above, the plume-reducing cooling tower 200 according to another embodiment of the present invention is the same as the plume-reducing cooling tower 100 shown in FIG. 1 to FIG. 4. Hereinafter, thus, a coupling relation of the housing 210 and the heat-exchanging unit 250 of the plume-reducing cooling tower 200 according to another embodiment of the present invention is mainly illustrated. Furthermore, the same reference numerals are utilized for indicating the elements of the plume-reducing cooling tower 200, which are the same of those in the plume-reducing cooling tower 100 shown in FIG. 1, and the detail description thereon will be omitted.

The heat-exchanging unit 250 includes a cooling pipe 251, a cooling water supplying pipe 254 and a cooling water exhausting pipe 255. The heat-exchanging unit 250 is connected to a separate cooling water supplying device (not shown), and cooling water supplied from the cooling water supplying device flows sequentially in the cooling water supplying pipe 254, the cooling pipe 251 and cooling water exhausting pipe 255. The heat-exchanging unit 250 is placed above the treated-water spraying unit 130 and cools saturated water vapor flowing upward from a lower portion of the treated-water spraying unit 130 to lower a temperature of saturated water vapor. Thus, as a temperature of saturated water vapor is lowered, fine mists contained in saturated water vapor are condensed so that mists are collected in the discharging unit 160.

The cooling pipe 251 includes a transverse cooling pipe 252 and a longitudinal cooling pipe 250, and the transverse cooling pipe 252 and the longitudinal cooling pipe 253 are disposed such that the entire plane shape of the cooling pipe corresponds to an inner horizontal plane shape of the housing 210. Thus, an overall plane shape of the cooling pipe 251 is a rectangular shape. Meanwhile, if the housing 210 has a circular inner horizontal plane shape, the cooling pipe may have a circular plane shape. Unlike the structure shown in FIG. 6, at this time, the transverse cooling pipe 252 and the longitudinal pipe 253 may not be distinguished from each other. Here, the transverse direction and the longitudinal direction are determined on the basis of FIG. 6. In addition, one side indicates a right side of FIG. 6 and the other side means a left side of FIG. 6. Also, "a front side" means the direction in which the cooling water supplying pipe 254 is placed, and "a rear side" means the direction in which the cooling water exhausting pipe 255 is installed.

A plurality of transverse cooling pipes 252 are extended from one side to the other side, that is, in the transverse direction and spaced from each other in the longitudinal direction. Cooling water flows in the transverse cooling pipes 252 from one side to the other side.

Two longitudinal cooling pipes 253 are extended in the direction which is perpendicular to the transverse cooling pipe 252 and are connected to both ends of each transverse cooling pipe 252, respectively. One of the longitudinal cooling pipes 253 supplies cooling water to one side of each transverse cooling pipe 252 and cooling water exhausted from the other side of each transverse cooling pipe 252 enters the other one of the longitudinal cooling pipes 253.

The cooling water exhausting pipe 255 is connected to the longitudinal cooling pipe 253 disposed at one side thereof to supply cooling water to the longitudinal cooling pipe 253. As shown in FIG. 6, the cooling water supplying pipe 254 is biased toward and connected to the front side of the longitudinal cooling pipe 253. However, the cooling water supplying pipe 254 may be connected to the rear side or a central portion of the longitudinal cooling pipe 253

The cooling water exhausting pipe 255 is connected to the longitudinal cooling pipe 253 disposed at the other side thereof to supply cooling water exhausted from the longitudinal cooling pipe 253 to the cooling water supplying device. As shown in FIG. 6, the cooling water exhausting 255 is biased toward and connected to the rear side of the longitudinal cooling pipe 253. However, the cooling water exhausting pipe 255 may be connected to the front side or the central portion of the longitudinal cooling pipe 253

Meanwhile, the housing 210 may further include a cooling water supplying pipe through port 216a to which the cooling water supplying pipe 254 is coupled and a cooling water exhausting pipe through port 216b to which the cooling water exhausting pipe 255 is coupled. Preferably, the cooling water supplying pipe through port 216a and the cooling water exhausting pipe through port 216b may be flushed with the heat-exchanging unit 250 and pass through the housing 210 from an outside to an inside.

Next, the plume-reducing cooling tower according to still another embodiment of the present invention is illustrated.

FIG. 7 is a sectional view corresponding to FIG. 4 and illustrating a discharging unit provided in a plume-reducing cooling tower according to still another embodiment of the present invention.

Referring to FIG. 1 to FIG. 4 and FIG. 7, a plume-reducing cooling tower according to still another embodiment of the present invention includes the housing 110, the filler-unit 120, the treated-water spraying unit 130, a discharging unit 360 and the exhausting unit 170. In addition, the plume-reducing cooling tower may further include the treated-water supplying pipe 140.

Except for the discharging unit 360, the structure of the plume-reducing cooling tower according to this embodiment of the present invention is the same as or similar to that of the plume-reducing cooling tower 100 according to FIG. 1 to FIG. 4. Hereinafter, thus, only the discharging unit 360 is shown and illustrated without showing the entire structure of the plume-reducing cooling tower according to this embodiment. Furthermore, the elements constituting the discharging unit 360, which are the same as those constituting the discharging unit 160 of the plume-reducing cooling tower 100 according to FIG. 1 to FIG. 4, are indicated by the same reference numerals and the detail description thereon will be omitted. Below, the distinctive configuration of this embodiment is described.

The discharging unit 360 includes the water-collecting plate 161 and a discharge electrode 362.

The discharge electrode 362 includes a supporting rod 363 and a discharge plate 364. A plurality of discharge electrodes 362 are extended in the vertical direction in a space between the water-collecting plates 161 and spaced from each other in the horizontal direction. The plurality of discharge electrodes 362 are spaced from each at regular intervals and disposed parallel to each other by separate supporting members (not shown in the drawing). The discharge electrode 362 is formed such that the discharge plate 364 is spaced from a surface of the water-collecting plate 161 by a certain distance.

A plurality of supporting rods 363 are extended in the vertical direction in a space between the water-collecting plates 161 and spaced from each other in the horizontal direction.

The discharge plate 364 is formed with a plate shape or a block shape and includes a coupling hole 364a formed at a central portion thereof and protrusions 364b formed on an outer surface thereof. The supporting rod 363 is inserted into the coupling hole 365 so that the discharge plate 364 is coupled with the supporting rod 363 is the vertical direction. Meanwhile, the discharge plate 364 may be formed such that the outer surface on which the protrusions 364b are formed is inclined upward or downward with respect to the horizontal direction. If the discharge plate 364 is inclined, collected mists flows easily along the inclined surface of the discharge plate 364 so that a size of particle is increased. Thus, collected mists flow toward the protrusions 364 and are fallen down. In addition, collected mists flow toward the supporting rod 363. If a hole (not shown) through which mist can pass is formed on the supporting rod 363, collected mists pass through the hole and are fallen down.

The plurality of discharge plates 364 are coupled with the supporting rods 363, respectively, and spaced from each other in the vertical direction. In other words, except that the plurality of discharge plates 364 are coupled with the supporting rods 363, respectively, in the horizontal direction and spaced from each other in the vertical direction, the structure of the discharge plate of this embodiment are substantially the same as that of the discharge plate 164 of the discharging unit 160 shown in FIG. 1 and FIG. 2.

Next, the plume-reducing cooling tower according to still another embodiment of the present invention is illustrated.

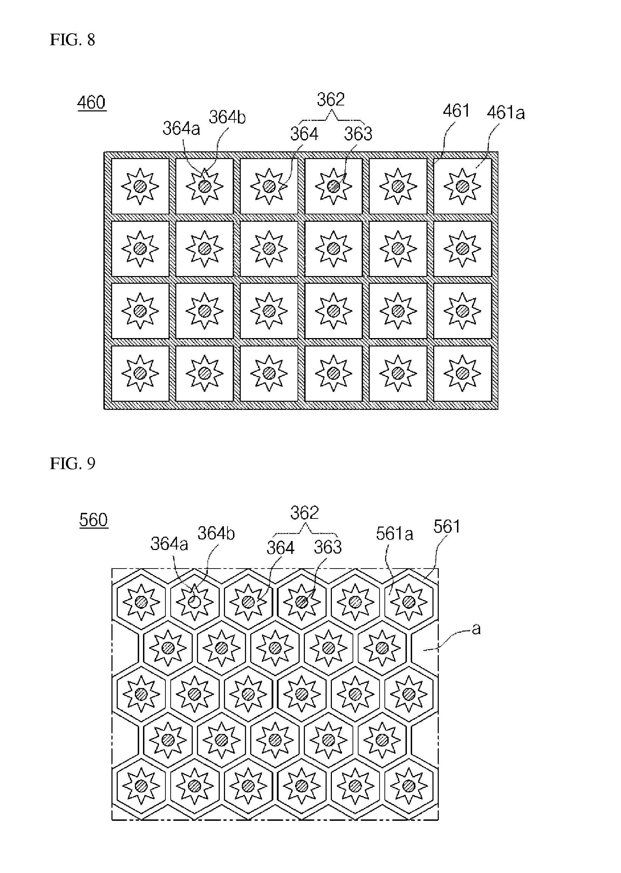

FIG. 8 is a sectional view corresponding to FIG. 4 and illustrating a discharging unit provided in a plume-reducing cooling tower according to still another embodiment of the present invention.

Referring to FIG. 1 to FIG. 4, FIG. 7 and FIG. 8, a plume-reducing cooling tower according to still another embodiment of the present invention includes the housing 110, the filler-unit 120, the treated-water spraying unit 130, a discharging unit 460 and the exhausting unit 170. In addition, the plume-reducing cooling tower may further include the treated-water supplying pipe 140.

Except for the discharging unit 460, the structure of the plume-reducing cooling tower according to this embodiment of the present invention is the same as or similar to that of the plume-reducing cooling tower 100 according to FIG. 1 to FIG. 4. Hereinafter, thus, only the discharging unit 460 of the plume-reducing cooling tower according to this embodiment is illustrated. Furthermore, the elements constituting the discharging unit 460, which are the same as those constituting the discharging unit 360 of the plume-reducing cooling tower according to FIG. 7, are indicated by the same reference numerals and the detail description thereon will be omitted. Below, the distinctive configuration of this embodiment is described.

The discharging unit 460 includes a water-collecting plate 461 and the discharge electrode 362.

The water-collecting plates 461 are arranged such that hollow water-collecting passages 461a, each of which having opened upper end and lower end, are disposed in the shape of a lattice. The water-collecting plates 461 are disposed such that the water-collecting passage 461a has a rectangular horizontal cross-sectional shape. In other words, the water-collecting plates 461 may be disposed such that the hollow rectangular columns are arranged in the horizontal direction in the shape of the lattice. In addition, the water-collecting plates 461 may be formed to have a circular horizontal cross-sectional shape. In other words, the water-collecting plates 461 are disposed such that each of the water-collecting passages 461a has a cylindrical shape.

A plurality of water-collecting plates 461 are placed upright in the housing 110 and adjoin each other to form the water-collecting passages in the lattices. Entire horizontal area of an arrangement of the water-collecting plates 461 is the same as that of the inner space of the housing 110. In addition, the water-collecting passages 461a formed by water-collecting plates 461 are directly connected to a space above the filler-unit 120 and are parallel to a flow direction of saturated water vapor to allow saturated water vapor to enter the water-collecting passages 461a .

The discharge electrode 362 includes the supporting rod 363 and the discharge plate 364.

The supporting rod 363 is placed and extended in the vertical direction in the water-collecting passage 461a.

The discharge plate 364 includes the coupling hole 364a and the protrusions 364b. The discharge electrode 362 is placed and extended in the vertical direction in the in the water-collecting passage 461a. The discharge plate 364 of the discharge electrode 362 is spaced from a surface of the water-collecting plate 461 by a certain distance.

In the discharging unit 460, since the water-collecting plates 461 are spaced from the protrusions 364b of the discharge electrodes 362 at regular intervals, the corona discharge is uniformly generated between the water-collecting plate 461 and the protrusion 364b. The discharging unit 460 can collect much more mists.

Next, the plume-reducing cooling tower according to still another embodiment of the present invention is illustrated.

FIG. 9 is a bottom view of a discharging unit provided in a plume-reducing cooling tower according to still another embodiment of the present invention.

Referring to FIG. 1 to FIG. 4 and FIG. 7 and FIG. 9, a plume-reducing cooling tower according to still another embodiment of the present invention includes the housing 110, the filler-unit 120, the treated-water spraying unit 130, a discharging unit 560 and the exhausting unit 170. In addition, the plume-reducing cooling tower may further include the treated-water supplying pipe 140.

Except for the discharging unit 560, the structure of the plume-reducing cooling tower according to this embodiment of the present invention is the same as or similar to that of the plume-reducing cooling tower according to FIG. 1 to FIG. 4. Hereinafter, thus, only the discharging unit 560 of the plume-reducing cooling tower according to this embodiment is illustrated. Furthermore, the elements constituting the discharging unit 560, which are the same as those constituting the discharging unit 360 of the plume-reducing cooling tower according to FIG. 7, are indicated by the same reference numerals and the detail description thereon will be omitted. Below, the distinctive configuration of this embodiment is described.

The discharging unit 560 includes a water-collecting plate 561 and the discharge electrode 362. Except a shape of the water-collecting plate 561 and an arrangement of the discharge electrodes 362, a structure of the discharging unit 560 is the same as that of the discharging unit 360 according to the embodiment shown in FIG. 7. To put it concretely, the water-collecting plates 561 are disposed such that hollow water-collecting passages 561a, each of which having opened upper end and lower end, are provided. The water-collecting plates 561 are disposed such that the water-collecting passage 561a has a hexagonal horizontal cross-sectional shape. In other words, the water-collecting plates 561 are disposed such that the water-collecting passage 561a has a hexagonal column shape. The water-collecting passages 561a are arranged in zigzag. Thus, the discharging unit 560 has a horizontal sectional shape of honeycomb. In addition, each water-collecting passage 561a may have a triangular horizontal sectional shape and twelve (12) sides of 6 (six) water-collecting passage 561a may be in contact with each other in series to form one water-collecting passage having a hexagonal horizontal cross-sectional shape. In other words, the water-collecting plates 561 may be disposed such that the water-collecting passage 561a has a triangular column shape. Meanwhile, if the overall shape of the discharging unit 560 is a square column shape or a cylinder shape, an empty region a formed among the water-collecting plates 561 may be blocked by separate members (not shown) to prevent water vapor from entering the empty region a.

In addition, since the discharge electrode 362 is placed in the water-collecting passage 561a formed by the water-collecting plates561, the discharge electrodes 362 are disposed in zigzag.

Next, the plume-reducing cooling tower according to still another embodiment of the present invention is illustrated.

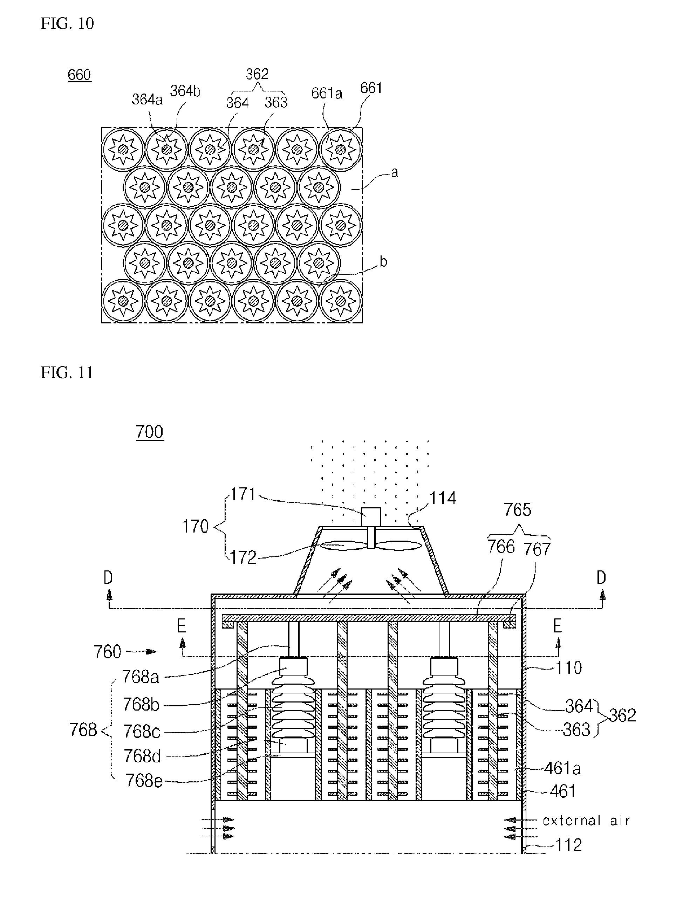

FIG. 10 is a bottom view of a discharging unit provided in a plume-reducing cooling tower according to still another embodiment of the present invention.

Referring to FIG. 1 to FIG. 9 and FIG. 10, a plume-reducing cooling tower according to still another embodiment of the present invention includes the housing 110, the filler-unit 120, the treated-water spraying unit 130, a discharging unit 560 and the exhausting unit 170. In addition, the plume-reducing cooling tower may further include the treated-water supplying pipe 140.

Except for the discharging unit 660, the structure of the plume-reducing cooling tower according to this embodiment of the present invention is the same as or similar to that of the plume-reducing cooling tower according to FIG. 9. Hereinafter, thus, only the discharging unit 60 of the plume-reducing cooling tower according to this embodiment is illustrated. Furthermore, the elements constituting the discharging unit 660, which are the same as those constituting the discharging unit 560 of the plume-reducing cooling tower according to FIG. 9, are indicated by the same reference numerals and the detail description thereon will be omitted. Below, the distinctive configuration of this embodiment is described.

The discharging unit 660 includes a water-collecting plate 661 and the discharge electrode 362. Except a shape of the water-collecting plate 661, a structure of the discharging unit 660 is the same as that of the discharging unit 560 according to the embodiment shown in FIG. 9. To put it concretely, the water-collecting plates 661 are disposed such that hollow water-collecting passages 661a, each of which having opened upper end and lower end, are provided. The water-collecting plates 661 are disposed such that the water-collecting passage 661a has a circular horizontal cross-sectional shape. Meanwhile, if the overall shape of the discharging unit 660 is a square column shape or a cylinder shape, empty regions a and b formed among the water-collecting plates 661 may be blocked by separate members (not shown) to prevent water vapor from entering the empty regions.

Next, the plume-reducing cooling tower according to still another embodiment of the present invention is illustrated.

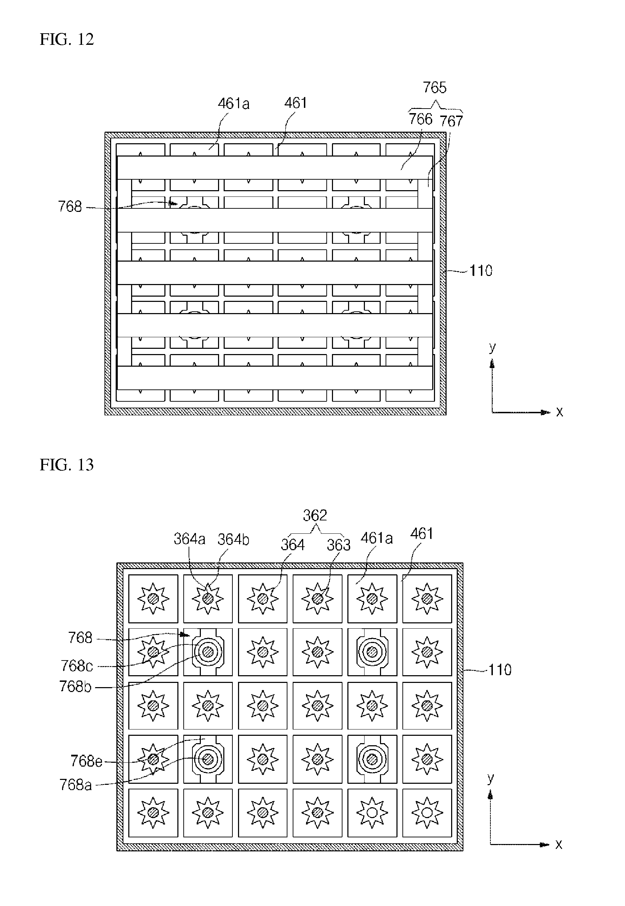

FIG. 11 is a partial vertical sectional view of a plume-reducing cooling tower according to still another embodiment of the present invention, FIG. 12 s a cross-sectional view taken along the line D-D of FIG. 11 and FIG. 13is a cross-sectional view taken along the line E-E of FIG. 11.

Referring to FIG. 1 to FIG. 4 and FIG. 8, FIG. 11 to FIG. 13, a plume-reducing cooling tower 700 according to still another embodiment of the present invention includes the housing 110, the filler-unit 120, the treated-water spraying unit 130, a discharging unit 760 and the exhausting unit 170. In addition, the plume-reducing cooling tower may further include the treated-water supplying pipe 140.

Except for the discharging unit 760, the structure of the plume-reducing cooling tower according to this embodiment of the present invention is the same as or similar to that of the plume-reducing cooling tower according to FIG. 1 to FIG. 4. Hereinafter, thus, only the discharging unit 760 of the plume-reducing cooling tower according to this embodiment is illustrated. Furthermore, the elements constituting the discharging unit 760, which are the same as those constituting the discharging unit 460 of the plume-reducing cooling tower according to FIG. 8, are indicated by the same reference numerals and the detail description thereon will be omitted. Below, the distinctive configuration of this embodiment is described.

The discharging unit 760 includes the water-collecting plates 461, the discharge electrode 362, a supporting frame 765 and an insulator module 768. In the housing 110, the discharging unit 760 is formed between the treated-water spraying unit 130 and the treated-water spraying unit 130.

The supporting frame 765 comprises a transverse frame 766 and a longitudinal frame 767. The supporting frame 765 is placed above the water-collecting plates 461 and coupled with an upper portion of the discharge electrode 362 to support the discharge electrode 362 to allow the water-collecting plate 161 to be spaced from the discharge electrode. Here, the transverse direction indicates the x direction and the longitudinal direction indicates the y direction in Fig. 12. The supporting frame 765 is electrically insulated from the water-collecting plate 461 and the housing 110 and can be electrically connected to a positive electrode of the control unit (not shown). Of course, a coupling relation between the transverse frame 766 and the longitudinal frame 767 may be changed.

The transverse frame 766 extended in the transverse direction has a bar shape and a length larger than a distance between the supporting rod 363 placed at one side of the housing 110 and the supporting rod 363 placed at the other side. A plurality of transverse frames 766 are spaced from each other by a distance, which is the same as that between the supporting rods 363, along the longitudinal direction. The transverse frame 766 is coupled to an upper end of the supporting rod 363 to support the supporting rod 363. In addition, the transverse frame 766 is coupled to an upper portion of a securing rod 768a of an insulator module 768 to support the insulator module 768.

The longitudinal frame 767 extended in the longitudinal direction is formed in the shape of a bar and have a length larger than a distance between the transverse frame 766 placed at a front side of the housing 110 and the transverse frame 766 placed at a rear side. At both sides of each transverse frame 766, at least two longitudinal frames 767 are coupled to both sides of each transverse frame 766, respectively, to support the transverse frames 766.

The insulator module 768 includes a securing rod 768a, an upper block 768b, an insulator 768c, a lower block 768d and a securing plate 768e. In an inside of the water-collecting plates 461, the insulator module 768 is provided at a location at which the discharge electrode 362 should be placed and allows the water-collecting plate 461 and the charge electrode 362 to be electrically isolated from each other. The insulator module 768 is provided on the discharge electrode 365 placed adjacent to a corner region of the housing 110 to stably support the supporting frame 765. Thus, the insulator module 768 reduces a volume and a horizontal area of the discharging unit 760. Also, since a portion of the insulator 768c is placed in the water-collecting passage 461a, the insulator module 768 reduces a height of the discharging unit 760. By adjusting a portion of the insulator of the insulator module 768, which is placed in the water-collecting passage 461a, it is possible to reasonably adjust a height of the discharging unit 760 in the housing 110 to a reasonable .

Meanwhile, although not shown in detail, in a case where a distance between the insulator 468c of the insulator module and the water-collecting plate 461 is small so that an electrical short can be generated between the insulator 468c and the water-collecting plate 461, in order to increase a horizontal area of the water-collecting passage 461a in which the insulator 468c is placed, the water-collecting plate 461 may be deformed outward or four adjacent water-collecting passages 461a may be combined with each other to form a relatively large space for placing the insulator 768c in the above space.

In the insulator module 768, meanwhile, the securing rod 768a, the upper block 768b or the lower block 768d employed for securing the insulator 768c may be omitted or formed integrally with each other, if necessary,

The securing rod 768a is formed in the shape of a rod, and an upper end of the securing rod is coupled to the transverse frame 766. In the light of an overall height of the insulator module 768, the securing rod 768 has a reasonable length.

The upper block 768b is formed in the shape of a block, and an upper portion of the upper block is coupled to the securing rod 768a. According to an area of the insulator 768c, the upper block 768b has a reasonable area required for securing the insulator 768c. In addition, since a lower portion of the upper block 768b is coupled to an upper portion of the insulator 768c, the upper block has a shape corresponding to that of an upper portion of the insulator 768c. If the securing rod 768a is directly coupled to the insulator 768c, the upper block 768b may be omitted.

The insulator 768c is formed by a conventional insulator utilized for an electrical insulation. The insulator 768c has a circular horizontal section and a diameter smaller than a width and a length of the water-collecting passage 461a. In addition, in the light of a height of the water-collecting passage 461a and an allowable height of the discharging unit 760, an appropriate height of the insulator 768c is determined. An upper portion of the insulator 768c is coupled to the upper block 768b or the securing rod 768a.

The lower block 768d is formed in the shape of a block and an upper portion of the lower block is coupled to the insulator 768c to support the insulator 768c. According to an area of the insulator 768c, the lower block 768d has a reasonable area required for securing the insulator 768c. In addition, since an upper portion of the lower block 768d is coupled to a lower portion of the insulator 768c, the lower block has a shape corresponding to that of a lower portion of the insulator 768c.

The securing plate 768e is formed in the shape of a plate and has a width or a length corresponding to a width of the water-collecting passage 461a. At the predetermined height, the securing plate 768e is coupled and fixed to an inner surface of the water-collecting passage 461a of the water-collecting plate 431 by a welding or a bolt. Also, the securing plate 768e is coupled to a lower surface of the lower block 768d to support the lower block 768d and the insulator 768c.

At each of four regions adjacent to four corners of a plane formed by the water-collecting plates 431, a portion of each of the insulators 768c of the insulator modules 4 is inserted in the water-collecting passage 461a of the water-collecting plate 461 and the securing plate 768e supports the insulator 768c and is secured to and supported by an inner surface of the water-collecting plate 461. An upper portion of the insulator 768 is coupled to the supporting frame 765 to support the supporting frame 765. Thus, the discharge electrode 362 is electrically isolated from the water-collecting plate 431 and supported by the insulator module 768. Since the insulator module 768 is placed inside of the water-collecting plate 461, a volume and a horizontal area of the discharging unit 760 are reduced and an overall volume and a horizontal area of the plume-reducing cooling tower can be reduced.

Next, the plume-reducing cooling tower according to still another embodiment of the present invention is illustrated.

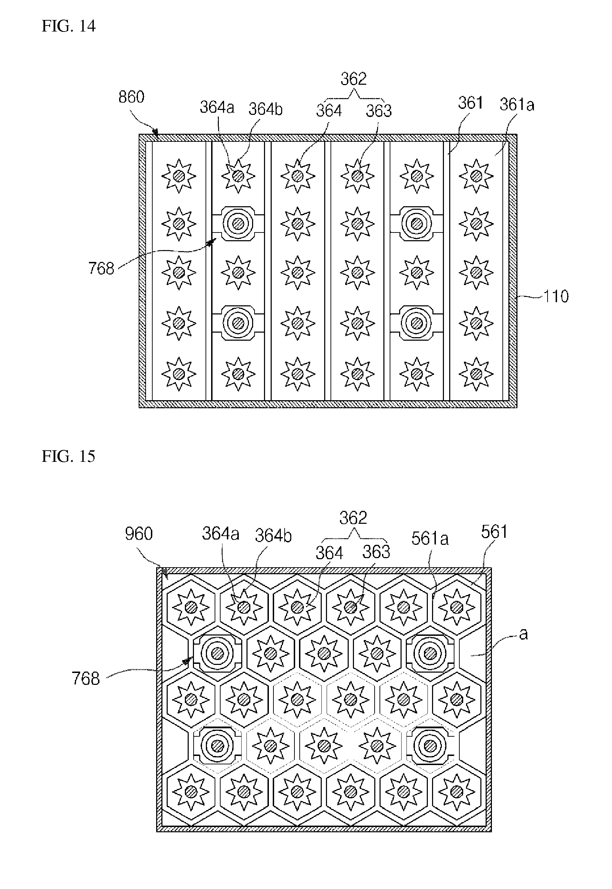

FIG. 14 is a horizontal sectional view corresponding to FIG. 13 and illustrating a discharging unit provided in a plume-reducing cooling tower according to still another embodiment of the present invention.

Referring to FIG. 1 to FIG. 4 and FIG. 11 to FIG. 14, a plume-reducing cooling tower according to still another embodiment of the present invention includes the housing 110, the filler-unit 120, the treated-water spraying unit 130, a discharging unit 860 and the exhausting unit 170. In addition, the plume-reducing cooling tower may further include the treated-water supplying pipe 140.

Except for the discharging unit 860, the structure of the plume-reducing cooling tower according to this embodiment of the present invention is the same as or similar to that of the plume-reducing cooling tower according to FIG. 1 to FIG. 11. Hereinafter, thus, only the discharging unit 660 of the plume-reducing cooling tower according to this embodiment is illustrated. Furthermore, the elements constituting the discharging unit 860, which are the same as those constituting the discharging unit 360 of the plume-reducing cooling tower according to FIG. 7, are indicated by the same reference numerals and the detail description thereon will be omitted. Below, the distinctive configuration of this embodiment is described.

The discharging unit 860 includes the water-collecting plate 361, the discharge electrode 362, the supporting frame 765 and the insulator module 768.

A plurality of water-collecting plates 361, each of which having a width and a height, are placed in the housing 110 in the vertical direction and spaced from each other in the horizontal direction. The water-collecting plates 361 are disposed in parallel to the flow direction of saturated water vapor. A plurality of water-collecting plates 361 are spaced from each other at regular intervals by separate supporting members (not shown). Accordingly, the water-collecting plates 361 are disposed such that the water-collecting passages 361a arranged in the forward-rearward direction are communicated with each other, and the water-collecting passages 361a arranged in the side-to-side direction are separated from each other.

The insulator modules 768 are provided at locations corresponding to four corner regions of the water-collecting plates 361 at which the charge electrodes should be installed. The insulator modules 768 are spaced from each other at a distance at which the charge electrodes 362 are spaced from each other.

Next, the plume-reducing cooling tower according to still another embodiment of the present invention is illustrated.

FIG. 15 is a horizontal sectional view corresponding to FIG. 13 and illustrating a discharging unit provided in a plume-reducing cooling tower according to still another embodiment of the present invention.

Referring to FIG. 1 to FIG. 4 and FIG. 11 to FIG. 13, FIG. 15, a plume-reducing cooling tower according to still another embodiment of the present invention includes the housing 110, the filler-unit 120, the treated-water spraying unit 130, a discharging unit 960 and the exhausting unit 170. In addition, the plume-reducing cooling tower may further include the treated-water supplying pipe 140.

Except for the discharging unit 960, the structure of the plume-reducing cooling tower according to this embodiment of the present invention is the same as or similar to that of the plume-reducing cooling tower according to FIG. 1 to FIG. 11. Hereinafter, thus, only the discharging unit 960 of the plume-reducing cooling tower according to this embodiment is illustrated. Furthermore, the elements constituting the discharging unit 960, which are the same as those constituting the discharging unit 560 of the plume-reducing cooling tower according to FIG. 9, are indicated by the same reference numerals and the detail description thereon will be omitted. Below, the distinctive configuration of this embodiment is described.

The discharging unit 960 includes the water-collecting plate 561, the discharge electrode 362, the supporting frame 765 and the insulator module 768.

The water-collecting plate 561 is disposed to form a hollow water-collecting passage 561a having opened lower and upper ends. The water-collecting plate 561 is formed such that the water-collecting passage 561a has a hexagonal horizontal section. Meanwhile, if the overall shape of the discharging unit is a square column shape or a cylinder shape, an empty region a formed among the water-collecting plates 561 may be blocked by separate members (not shown) to prevent water vapor from entering the empty region a. In addition, the housing 110 of the plume reducing cooling tower may have a circular, polygonal or octagonal horizontal sectional shape. By more effectively utilizing an inner space of the housing 110, in this case, the water-collecting plates 561 may be arranged.

Next, the plume-reducing cooling tower according to still another embodiment of the present invention is illustrated.

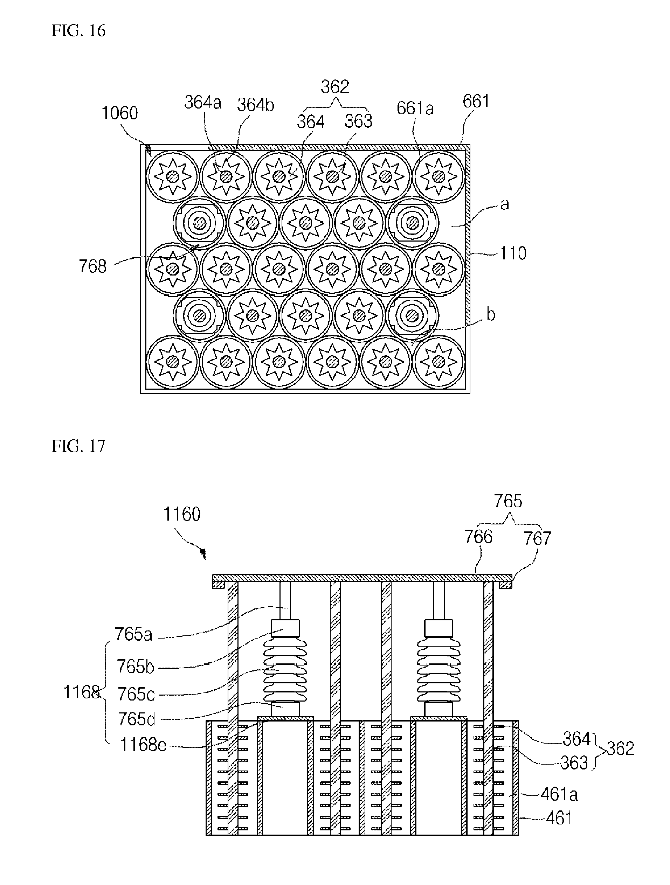

FIG. 16 is a horizontal sectional view corresponding to FIG. 13 and illustrating a discharging unit provided in a plume-reducing cooling tower according to still another embodiment of the present invention.

Referring to FIG. 1 to FIG. 4 and FIG. 11 to FIG. 13, FIG. 16, a plume-reducing cooling tower according to still another embodiment of the present invention includes the housing 110, the filler-unit 120, the treated-water spraying unit 130, a discharging unit 1060 and the exhausting unit 170. In addition, the plume-reducing cooling tower may further include the treated-water supplying pipe 140.

Except for the discharging unit 1060, the structure of the plume-reducing cooling tower according to this embodiment of the present invention is the same as or similar to that of the plume-reducing cooling tower according to FIG. 1 to FIG. 11. Hereinafter, thus, only the discharging unit 1060 of the plume-reducing cooling tower according to this embodiment is illustrated. Furthermore, the elements constituting the discharging unit 1060, which are the same as those constituting the discharging unit 660 of the plume-reducing cooling tower according to FIG. 10, are indicated by the same reference numerals and the detail description thereon will be omitted. Below, the distinctive configuration of this embodiment is described.

The discharging unit 1060 includes a water-collecting plate 661, the discharge electrode 362, the supporting frame 765 and the insulator module 768.

The water-collecting plate 661 is disposed to form a hollow water-collecting passage 661a having opened lower and upper ends. The water-collecting plate 661 is formed such that the water-collecting passage 661a has a circular horizontal section. Meanwhile, if the overall shape of the discharging unit 1060 is a square column shape or a cylinder shape, empty regions a and b formed among the water-collecting plates 661 may be blocked by separate members (not shown) to prevent water vapor from entering the empty regions a and b. In addition, the housing 110 of the plume reducing cooling tower may have a circular, polygonal or octagonal horizontal sectional shape. By more effectively utilizing an inner space of the housing 110, in this case, the water-collecting plates 661 may be arranged.

Next, the plume-reducing cooling tower according to still another embodiment of the present invention is illustrated.

FIG. 17 is a vertical sectional view corresponding to FIG. 11 and illustrating a discharging unit provided in a plume-reducing cooling tower according to still another embodiment of the present invention.

Referring to FIG. 1 to FIG. 4 and FIG. 11 to FIG. 13, FIG. 17, a plume-reducing cooling tower according to still another embodiment of the present invention includes the housing 110, the filler-unit 120, the treated-water spraying unit 130, a discharging unit 1160 and the exhausting unit 170. In addition, the plume-reducing cooling tower may further include the treated-water supplying pipe 140.

Except for the discharging unit 1160, the structure of the plume-reducing cooling tower according to this embodiment of the present invention is the same as or similar to that of the plume-reducing cooling tower according to FIG. 1 to FIG. 11. Hereinafter, thus, only the discharging unit 1160 of the plume-reducing cooling tower according to this embodiment is illustrated. Furthermore, the elements constituting the discharging unit 1160, which are the same as those constituting the discharging unit 760 of the plume-reducing cooling tower according to FIG. 11 to FIG. 13, are indicated by the same reference numerals and the detail description thereon will be omitted. Below, the distinctive configuration of this embodiment is described.

The discharging unit 1160 includes the water-collecting plate 461, the discharge electrode 362, the supporting frame 765 and an insulator module 1168. Except a structure of the insulator module 1168, a structure of the discharging unit 1160 is the same as that of the discharging unit 760 of the embodiment shown in FIG. 11 to FIG. 13.

The insulator module 1168 includes a securing rod 765a, an upper block 765b, an insulator 765c, a lower block 765d and a securing plate 1168e. On the water-collecting plates 461, the insulator module 1168 is provided at a location at which the discharge electrode 362 should be placed and allows the water-collecting plate 461 and the charge electrode 362 to be electrically isolated from each other. To put it concretely, the securing plate 1168e is placed on the water-collecting passage 461a, and the securing rod 765a, the upper block 765b, the insulator 765c and the lower block 765d are placed on the securing plate. Thus, the insulator module 1168 is entirely exposed above the water-collecting plate 461 and supports the supporting frame 765. Since the insulator module 1168 is placed on the water-collecting plate 461 and supports the supporting frame 765, the insulator module can be easily installed.

Meanwhile, the insulator module 1168 according to the embodiment shown in FIG. 17 can be applied to the embodiment shown in FIG. 14, FIG. 15 and FIG. 6. In other words, in a case where the water-collecting plates 461 are arranged in the shape of a cylinder or a hexagonal column, the insulator module 1168 can be applied.

Next, the plume-reducing cooling tower according to still another embodiment of the present invention is illustrated.

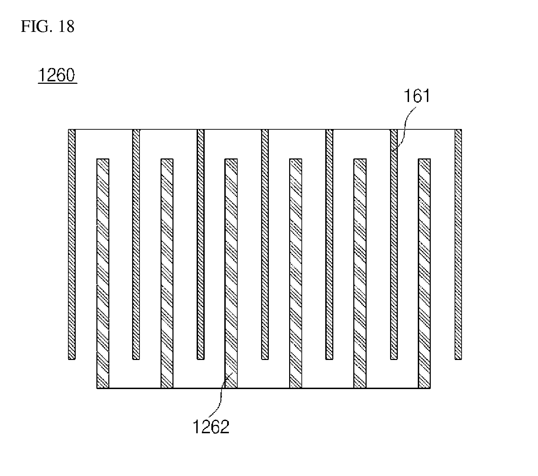

FIG. 18 is a horizontal sectional view of a discharging unit provided in a plume-reducing cooling tower according to still another embodiment of the present invention.

Referring to FIG. 1 to FIG. 4 and FIG. 18, a plume-reducing cooling tower according to still another embodiment of the present invention includes the housing 110, the filler-unit 120, the treated-water spraying unit 130, a discharging unit 1260 and the exhausting unit 170. In addition, the plume-reducing cooling tower may further include the treated-water supplying pipe 140.

Except for the discharging unit 1260, the structure of the plume-reducing cooling tower according to this embodiment of the present invention is the same as or similar to that of the plume-reducing cooling tower 100 according to FIG. 1 to FIG. 4. Hereinafter, thus, only the discharging unit 1260 is shown and illustrated without showing the entire structure of the plume-reducing cooling tower according to this embodiment. Furthermore, the elements constituting the discharging unit 1260, which are the same as those constituting the discharging unit 160 of the plume-reducing cooling tower 100 according to FIG. 1 to FIG. 4, are indicated by the same reference numerals and the detail description thereon will be omitted. Below, the distinctive configuration of this embodiment is described.

The discharging unit 1260 includes the water-collecting plate 161 and a discharge electrode 1262.

The discharge electrodes 1262 are formed in the shape of a plate having a width and a height, and corresponding to the water-collecting plate 161. The discharge electrodes 1262 are spaced from each other in the horizontal direction by separate supporting members (not shown). The discharge electrodes 1262 are disposed a space between two water-collecting plates 161 which are adjacent and opposite each other, and are disposed to be opposite to the water-collecting plates 161. In this case, the discharge electrodes 1262 are disposed apart by the same distance from surfaces of two water-collecting plates 161 which are adjacent.

Since a corona discharge is performed between the water-collecting plate 161 and the discharge electrode 1262 which are formed by the shape of a plate and are opposite to each other in the discharging unit 1260, the corona discharge may be performed on a larger area. Therefore, the discharging unit 1260 can be increased a mist removal efficiency.

The plume-reducing cooling tower of the present invention electrifies mists contained in saturated water vapor and removes them so that it is possible to effectively reduce a generation of plume.

In addition, the plume-reducing cooling tower of the present invention is advantageous in that saturated water vapor is primarily cooled by cooling water to increase a size of mist and mist is additionally electrified and removed so that it is possible to effectively reduce a generation of plume.

Furthermore, the plume-reducing cooling tower of the present invention is advantageous in that external air enter a space between the cooling water spraying unit and the discharging unit to lower a temperature of saturated water vapor and increase a size of mist, in particular, in winter, external air having relatively extremely low temperature and humidity enters therein to lower a temperature of saturated water vapor so that a size of mist is effectively increased, as a result, the mist removal efficiency and the plume reduction efficiency are increased.

Also, in the plume-reducing cooling tower of the present invention, since the insulator module for insulating the water-collecting plate from the discharge electrode is placed on the water-collecting passage of the water-collecting plate, it is possible to reduce a volume and a horizontal area of the discharging unit, and a space for the discharging unit employed for removing plume is relatively increased in a space of the same housing so that the plume reduction efficiency is increased and a flow of harmful gas can be smoothly maintained.

Furthermore, in the plume-reducing cooling tower of the present invention, since the insulator of the insulator module is placed in the water-collecting passage of the water-collecting plate, a volume and a height of the discharging unit can be reduced.

In addition, the plume-reducing cooling tower of the present invention is advantageous in that external air enters a space above the discharging unit and exhausted air is mixed with external air in the housing to allow mist contained in exhausted air to be absorbed into external air so that a concentration and height of plume can be reduced.

Also, since the plume-reducing cooling tower of the present invention reduces a generation of plume, it is possible to reduce filing of civil complaints caused by concern of leakage of harmful materials or pollutants.

In addition, since the plume-reducing cooling tower of the present invention collects mist contained in saturated water vapor, treated-water is re-used and an operational expense is saved.

While the present invention has been described with respect to the specific embodiments, it will be apparent to those skilled in the art that various changes and modifications may be made without departing from the spirit and scope of the invention as defined in the following claims.

## Claims

1. A plume-reducing cooling tower, comprising:
a housing having a space formed therein, the housing including a lower air inlet formed at a lower portion thereof for allowing external to enter the space thereof and an upper air outlet formed at an upper portion thereof for exhausting exhausted gas;
a filler-unit provided at a place above the lower air inlet in the housing for allowing external air to pass therethrough and flow upward;
a treated-water spraying unit provided above the filler-unit in the housing for spraying treated-water on the filler-unit;
a discharging unit provided above the treated-water spraying unit in the housing for electrifying mist, which is contained in water vapor formed by a contact between treated-water and the external air, through a corona discharge and collecting mist; and
an exhausting unit provided at the upper air outlet for exhausting exhausted air passed through the discharging unit.

2. The plume-reducing cooling tower of claim 1, wherein the housing comprises
a water-collecting reservoir having a sealed at lower end for collecting treated-water sprayed from the treated-water spraying unit;
a treated-water inlet formed at a lower portion of the housing, the treated-water inlet being formed below a surface of the treated-water collected in the water-collecting reservoir; and
a treated-water pipe connected to the treated-water inlet via one portion thereof and connected to the treated-water spraying unit through the other portion thereof for supplying treated-water.

3. The plume-reducing cooling tower of claim 1, further comprising a cooling water spraying unit disposed above the treated-water spraying unit for spraying cooling water having a temperature relatively lower than that of treated-water sprayed from the treated-water spraying unit to an upper end of the treated-water spraying unit.

4. The plume-reducing cooling tower of claim 3, wherein
the housing further comprises a cooling water pipe inlet provided above the treated-water spraying unit; and
the cooling water spraying unit a hollow cooling water spraying pipe placed above the treated-water spraying unit for spraying cooling water through a spraying hole formed on a lower portion thereof and a cooling water pipe extended from an outside of the housing to an inside of the housing through the cooling water pipe inlet and connected to the cooling water spraying pipe for supplying cooling water to the cooling water spraying pipe.

5. The plume-reducing cooling tower of claim 4, wherein
the housing further comprises a treated-water pipe inlet formed on a lower portion thereof; and
the cooling water spraying unit further comprises
a treated-water pipe extended from an outside of the housing to an inside of the housing through the treated-water pipe inlet;
a circulation pump connected to the treated-water pipe via an inlet thereof and connected to the cooling water pipe via an outlet thereof for receiving treated-water collected in a low portion of the housing through the treated-water pipe and supplying treated-water to the cooling water pipe; and
a cooling unit surrounding the treated-water pipe or the cooling water pipe for cooling treated-water through process cooling water supplied from an outside.

6. The plume-reducing cooling tower of claim 1, further comprising a heat-exchanging unit disposed above the treated-water spraying unit to cool water vapor flowing upward to the treated-water spraying unit.

7. The plume-reducing cooling tower of claim 6, wherein the heat-exchanging unit comprises,
a hollow cooling pipe in which cooling water flows;
a cooling water supplying pipe connected to one side of the cooling pipe for supplying cooling water to the cooling pipe; and
a cooling water exhausting pipe connected to the other side of the cooling pipe for exhausting cooling water flowing from the cooling pipe.

8. The plume-reducing cooling tower of claim 7, wherein the cooling pipe comprises a plurality of transverse cooling pipes extended from one side to the other side and spaced from each other and two longitudinal cooling pipes extended in the direction which is perpendicular to the transverse cooling pipes, the longitudinal cooling pipes being connected to both ends of each transverse cooling pipe, respectively, and wherein the cooling water supplying pipe and the cooling water exhausting pipe are connected to the longitudinal cooling pipes, respectively.

9. The plume-reducing cooling tower of claim 7, wherein the housing further comprises,
a cooling water supplying pipe through port through which the cooling water supplying pipe passes; and
a cooling water exhausting pipe through port through which the cooling water exhausting pipe passes.

10. The plume-reducing cooling tower of claim 1, wherein the discharging unit comprises;
a plurality of discharge electrodes extended in the vertical direction and spaced from each other in the horizontal direction between the water-collecting plates,
a plurality of discharge electrodes extended in the horizontal direction between the discharge electrodes and spaced from each other in the vertical direction, each discharge electrode comprising a supporting rod extended in the horizontal direction and a discharge plate having a coupling hole formed at a central portion thereof and a protrusion formed on an outer surface thereof to allow the discharge plate to be coupled to the supporting rod through the coupling hole,
wherein a corona discharge is performed between the discharge plate of the discharge electrode and the water-collecting plate.

11. The plume-reducing cooling tower of claim 1, wherein the discharging unit comprises,
a plurality of water-collecting plates formed such a plurality of water-collecting passages are arranged in a plane; and
a discharge electrode inserted in the water-collecting passage for allowing a corona discharge to be caused between the discharge electrode and the water-collecting plate.

12. The plume-reducing cooling tower of claim 11,
wherein the plurality of water-collecting plates are formed in the shape of a plate, placed in the housing in the vertical direction and spaced from each other in the horizontal direction,
wherein the plurality of discharge electrodes are extended in the vertical direction and spaced from each other in the horizontal direction between the water-collecting plates,
wherein each of the discharge electrode comprises a supporting rod extended in the vertical direction and a discharge plate having a coupling hole formed at a central portion thereof and a protrusion formed on an outer surface thereof to allow the discharge plate to be coupled to the supporting rod through the coupling hole, and
wherein a corona discharge is performed between the discharge plate of the discharge electrode and the water-collecting plate.

13. The plume-reducing cooling tower of claim 11, wherein the water-collecting plates are disposed such that hollow water collecting passages having opened upper and lower ends are arranged in the lattices, wherein each of the discharge electrode comprises a supporting rod extended in the vertical direction and placed in the water- collecting passage of the water-collecting plate and a discharge plate having a coupling hole formed at a central portion thereof and a protrusion formed on an outer surface thereof to allow the discharge plate to be coupled to the supporting rod through the coupling hole, and wherein a corona discharge is performed between the discharge plate of the discharge electrode and the water-collecting plate.

14. The plume-reducing cooling tower of claim 11, wherein each water-collecting passage has opened upper and lower ends and has a hollow triangular column shape, a hollow rectangular column shape, hollow a cylinder shape or a hollow hexagonal column, and the water-collecting passages are arranged in the lattices.

15. The plume-reducing cooling tower of claim 12 or claim 13, wherein the discharging unit further comprises;
a supporting frame placed above the water-collecting plate and supporting the discharge electrode to allow the discharge electrode to be spaced from the water-collecting plate; and
an insulator module supporting the supporting frame at an inside of the water-collecting plate for electrically isolating the water-collecting plate from the discharge electrode.

16. The plume-reducing cooling tower of claim 15, wherein the supporting frame is equipped with a plurality of transverse frames coupled to an upper end of the supporting rod and a longitudinal frame coupled to both sides of the transverse frame, and wherein the insulator module comprises a securing rod coupled to the transverse frame, an insulator coupled to the securing rod and a securing plate coupled to a lower portion of the insulator and secured to an inner surface of the water-collecting passage of the water-collecting plate at certain height.

17. The plume-reducing cooling tower of claim 15, wherein the supporting frame is equipped with a plurality of transverse frames coupled to an upper end of the supporting rod and a longitudinal frame coupled to both sides of the transverse frame, and wherein the insulator module comprises a securing rod coupled to the transverse frame, an insulator coupled to the securing rod and a securing plate coupled to a lower portion of the insulator and placed on an upper surface of the water-collecting passage of the water-collecting plate.

18. The plume-reducing cooling tower of claim 16, wherein the insulator module further comprises an upper block coupled to a lower portion of the fixing rod and to an upper portion of the insulator and a lower block coupled to a lower portion of the insulator and to an upper portion of the fixing plate.

19. The plume-reducing cooling tower of claim 1, wherein the housing further comprises an upper air inlet formed between the treated-water spraying unit and the discharging unit to allow external air to be introduced.

20. The plume-reducing cooling tower of claim 1, wherein the housing further comprises a third air inlet formed between the discharging unit and the exhausting unit to allow external air to be introduced.

21. The plume-reducing cooling tower of claim 10, wherein the water-collecting plate has a vertical height of 200 to 1,000 mm, the discharge plates are spaced from each other at a vertical distance of 5 to 100 mm in the vertical direction, and the water-collecting plate and the protrusion of the discharge plate are spaced from each other at a horizontal distance of 50 to 200 mm in the horizontal direction.

22. The plume-reducing cooling tower of claim 1, wherein the discharging unit comprises,
the plurality of water-collecting plates formed in the shape of a plate, placed in the housing in the vertical direction and spaced from each other in the horizontal direction;
the plurality of discharge electrodes formed in the shape of a plate corresponding to the water-collecting plate and placed between the water-collecting plates in the vertical direction; and
wherein a corona discharge is performed between the discharge electrode and the water-collecting plate.
